# EUROPÄISCHE PATENTANMELDUNG

(11) **EP 4 512 288 A2**
(43) Veröffentlichungstag der Anmeldung: **26.02.2025**
(21) Anmeldenummer: 24193757.2
(22) Anmeldetag: 09.08.2024
(51) Int. Cl.: A47J 42/40

(54) **KAFFEEMÜHLE ZUM MAHLEN VON KAFFEEBOHNEN**

(30) Priorität: 22.08.2023 DE 102023122382
(71) Anmelder: Wilhelm Gronbach GmbH & Co. KG, 6342 Niederndorf (AT)
(72) Erfinder: Weyerer, Leonhard, 83131 Nußdorf am Inn (DE); Bocks, Stefan, 83112 Frasdorf (DE)
(74) Vertreter: Hofstetter, Schurack & Partner

(57) **Zusammenfassung**

Die Erfindung betrifft eine Kaffeemühle (10) zum Mahlen von Kaffeebohnen, mit einem Halter (28), an welchem ein Siebträger (30) zum Auffangen eines aus dem Mahlen resultierenden Kaffeepulvers abstützbar ist. Vorgesehen ist ein dem Halter (28) gegenüberliegender Gegenhalter (34), welcher um eine Drehachse (36) relativ zu dem Halter (28) und relativ zu einem Basiselement (38) der Kaffeemühle (10) drehbar an dem Basiselement (38) gehalten ist. Der Gegenhalter (34) umfasst eine um eine erste Strecke, welche sich entlang einer senkrecht zur Drehachse (36) verlaufenden, ersten Geraden erstreckt, von der Drehachse (36) beabstandete, erste Abstützfläche (40), an welcher zum Halten des Siebträgers (30) an dem Halter (28) der Siebträger (30) abstützbar ist.

## Beschreibung

Die vorliegende Erfindung betrifft eine Kaffeemühle zum Mahlen von Kaffeebohnen gemäß dem Oberbegriff von Patentanspruch 1 beziehungsweise 12.

Derartige Kaffeemühlen zum Mahlen von Kaffeebohnen sind aus dem allgemeinen Stand der Technik bereits hinlänglich bekannt. Die jeweilige Kaffeemühle weist einen auch als Halteeinrichtung oder Halteelement bezeichneten Halter auf, an welchem ein Siebträger zum Auffangen eines aus dem Mahlen der Kaffeebohnen resultierenden Kaffeepulvers abstützbar ist. Üblicherweise weist die jeweilige Kaffeemühle ein Mahlwerk auf, mittels welchem die Kaffeebohnen gemahlen werden können. Durch das Mahlen der Kaffeebohnen wird aus den Kaffeebohnen das genannte, einfach auch als Pulver bezeichnete Kaffeepulver hergestellt, welches üblicherweise zu dem Halter oder in Richtung des Halters geführt wird, sodass das Kaffeepulver in den an dem Halter abgestützten Siebträger einleitbar oder einführbar, mithin dem Siebträger zuführbar ist. Insbesondere kann dabei das Kaffeepulver in den an dem Halter abgestützten Siebträger hineinrieseln.

Aufgabe der vorliegenden Erfindung ist es, eine Kaffeemühle der eingangs genannten Art derart weiterzuentwickeln, dass das Kaffeepulver dem an dem Halter abgestützten Siebträger besonders vorteilhaft zugeführt werden kann.

Diese Aufgabe wird durch eine Kaffeemühle mit den Merkmalen des Patentanspruchs 1 sowie durch eine Kaffeemühle mit den Merkmalen des Patentanspruchs 12 gelöst.

Vorteilhafte Ausgestaltungen mit zweckmäßigen Weiterbildungen der Erfindung sind in den übrigen Ansprüchen angegeben.

Ein erster Aspekt der Erfindung betrifft eine einfach auch als Mühle bezeichnete Kaffeemühle zum Mahlen von Kaffeebohnen. Die Kaffeebohnen werden auch einfach als Bohnen bezeichnet. Die Kaffeemühle weist einen auch als Halteelement oder Halteeinrichtung bezeichneten Halter auf, an welchem ein Siebträger zum Auffangen eines aus dem Mahlen der Kaffeebohnen resultierenden Kaffeepulvers abstützbar oder abgestützt ist. Mit anderen Worten, durch das Mahlen der Kaffeebohnen wird aus den Kaffeebohnen das genannte, einfach auch als Pulver bezeichnete Kaffeepulver erzeugt oder hergestellt. Insbesondere weist die Kaffeemühle ein Mahlwerk auf, mittels welchem durch Antreiben des Mahlwerks die beispielsweise in einem Aufnahmebereich der Kaffeemühle aufnehmbaren oder aufgenommenen Kaffeebohnen gemahlen werden können. Die Kaffeebohnen können von dem Aufnahmebereich dem Mahlwerk zugeführt, insbesondere in das Mahlwerk eingebracht werden, wobei durch Antreiben des Mahlwerks die mittels des Mahlwerks dem Mahlwerk zugeführten Kaffeebohnen gemahlen und/oder das Kaffeepulver hergestellt werden kann. Denkbar ist, dass das Mahlwerk manuell und somit von einer Person antreibbar ist. Ferner ist es denkbar, dass die Kaffeemühle einen insbesondere als Elektromotor ausgebildeten Motor aufweist, mittels welchem das Mahlwerk antreibbar ist. Beispielsweise weist die Kaffeemühle eine Führungseinrichtung auf, mittels welcher das aus dem Mahlen der Kaffeebohnen resultierende Kaffeepulver zu dem Halter und/oder in Richtung des Halters und dabei beispielsweise zu dem Siebträger und/oder in Richtung des Siebträgers führbar ist. Somit kann beispielsweise das Kaffeepulver insbesondere schwerkraftbedingt entlang der Führungseinrichtung rutschen und mittels der Führungseinrichtung in Richtung des Siebträgers geführt und dem Siebträger zugeführt, insbesondere in den Siebträger eingeleitet, werden. Somit ist das Kaffeepulver insbesondere über die Führungseinrichtung dem an dem Halter abgestützten oder abstützbaren Siebträger zuführbar.

Um nun das aus dem Mahlen resultierende Kaffeepulver dem Siebträger besonders vorteilhaft zuführen zu können, weist die Kaffeemühle erfindungsgemäß einen dem Halter gegenüberliegenden Gegenhalter auf. Beispielsweise liegt der Gegenhalter dem Halter in Gebrauchslage der Kaffeemühle in vertikaler Richtung gegenüber, wobei die Kaffeemühle in ihrer für ihren bestimmungsgemäßen Gebrauch vorgesehenen Lage oder Ausrichtung die Gebrauchslage einnimmt. Insbesondere nimmt die Kaffeemühle dann die Gebrauchslage ein, wenn die Kaffeemühle in vertikaler Richtung nach unten an einer horizontalen Ebene abgestützt ist und auf der horizontalen Ebene steht und dabei das Kaffeepulver, insbesondere rein, schwerkraftbedingt von dem Mahlwerk, insbesondere über die Führungseinrichtung, zu dem Halter oder in Richtung des Halters und dabei in den an dem Halter abgestützten Siebträger rutscht oder strömt.

Der Gegenhalter ist um eine Drehachse relativ zu dem Halter und relativ zu einem Basiselement der Kaffeemühle drehbar an dem Basiselement gehalten. Dies bedeutet, dass die Kaffeemühle das Basiselement aufweist, an welchem der Gegenhalter derart gehalten ist, dass der Gegenhalter um die Drehachse relativ zu dem Basiselement oder auch relativ zu dem Halter drehbar ist. Dies bedeutet, dass der Gegenhalter um die Drehachse relativ zu dem Basiselement und relativ zu dem Halter gedreht werden kann, während der Gegenhalter an dem Basiselement gehalten, mithin mit dem Basiselement verbunden ist. Insbesondere kann der Siebträger derart an der Kaffeemühle gehalten werden, um das Kaffeepulver aufzufangen, das wenigstens ein erster Teilbereich des Siebträgers, insbesondere direkt, an dem Halter abstützbar ist, wobei beispielsweise der erste Teilbereich des Siebträgers in der Gebrauchslage der Kaffeemühle in vertikaler Richtung nach unten, insbesondere direkt, an dem Halter abstützbar ist. Außerdem kann beispielsweise zumindest ein zweiter Teilbereich des Halters, in der Gebrauchslage der Kaffeemühle in vertikaler Richtung nach oben hin, an dem Gegenhalter, insbesondere direkt, abgestützt werden oder sein, insbesondere während der erste Teilbereich an dem Halter abgestützt ist. Somit kann der Siebträger zwischen den Halter und den Gegenhalter eingelegt werden. Insbesondere kann der Siebträger mittels des Gegenhalters und mittels des Halters derart an der Kaffeemühle gehalten werden, dass während des Mahlens der Kaffeebohnen Relativbewegungen zwischen dem Siebträger und dem Halter und zwischen dem Siebträger und dem Gegenhalter unterbleiben.

Der Gegenhalter weist insbesondere bezogen auf einen Zustand, in welchem um die Drehachse erfolgende Relativdrehungen zwischen dem Gegenhalter und dem Basiselement unterbleiben, eine um eine erste Strecke, welche sich entlang einer senkrecht zur Drehachse verlaufenden ersten Geraden erstreckt, von der Drehachse beabstandete, erste Abstützfläche auf, an welcher zum Halten des Siebträgers an dem Halter der Siebträger, insbesondere der zweite Teilbereich, abstützbar, insbesondere direkt abstützbar, ist. Außerdem weist der Gegenhalter insbesondere bezogen auf den zuvor genannten Zustand, eine um eine zweite Strecke, welche sich entlang einer senkrecht zur Drehachse verlaufenden, zweiten Geraden erstreckt, von der Drehachse beabstandete, zweite Abstützfläche auf, an welcher zum Halten des Siebträgers an dem Halter der Siebträger, insbesondere der zweite Teilbereich, abstützbar, insbesondere direkt abstützbar, ist. Dabei verläuft die zweite Gerade schräg oder senkrecht zur ersten Geraden, und die zweite Strecke ist größer als die erste Strecke. Mit anderen Worten kann der Siebträger, insbesondere der zweite Teilbereich des Siebträgers, insbesondere während der Siebträger, insbesondere der erste Teilbereich, an dem Halter abgestützt ist, wahlweise an der ersten Abstützfläche oder an der zweiten Abstützfläche abgestützt werden. Da die Abstützflächen des Gegenhalters unterschiedlich von weit von der Drehachse des Gegenhalters beabstandet sind, können durch wahlweises Abstützen des Siebträgers, insbesondere des zweiten Teilbereichs des Siebträgers, an der ersten Abstützfläche oder an der zweiten Abstützfläche unterschiedliche Stellung, insbesondere Winkelstellungen, eingestellt werden, indem der Siebträger wahlweise an dem Halter gehalten werden kann. Ist beispielsweise der Siebträger, insbesondere gleichzeitig, an dem Halter und an der ersten Abstützfläche abgestützt, so nimmt der Siebträger eine erste der genannten Stellungen, insbesondere relativ zu der Kaffeemühle ein, und ist beispielsweise der Siebträger, insbesondere gleichzeitig, an dem Halter und an der zweiten Abstützfläche abgestützt, so weist beispielsweise bezogen auf die Gebrauchslage der Kaffeemühle der größte von dem Siebträger und von der Horizontalen eingeschlossene Winkel einen ersten Wert auf, und in der zweiten Stellung weist beispielsweise bezogen auf die Gebrauchslage der größte von dem Siebträger und der Horizontalen eingeschlossene Winkel einen vom dem ersten Wert unterschiedlichen, zweiten Wert auf. Wieder mit anderen Worten ausgedrückt kann durch um die Drehachse relativ zu dem Basiselement erfolgendes Drehen des Gegenhalters und somit durch wahlweises Abstützen des Siebträgers an der ersten Abstützfläche oder an der zweiten Abstützfläche eine Ausrichtung des Siebträgers relativ zu der Kaffeemühle eingestellt werden, sodass der Siebträger derart bedarfsgerecht relativ zu der Kaffeemühle ausgerichtet werden kann, dass das aus dem Mahlen resultierende Kaffeepulver den Siebträger vorteilhaft trifft, mithin das Kaffeepulver vorteilhaft und treffgenau in den Siebträger eingeleitet werden kann. Somit kann vermieden werden, dass eine übermäßige Menge des aus dem Mahlen der Kaffeebohnen resultierenden Kaffeepulvers den an dem Halter und dem Gegenhalter abgestützten Siebträger verfehlt und nicht genutzt werden kann.

Beispielsweise ist der Gegenhalter um die Drehachse relativ zu dem Basiselement in wenigstens zwei Drehstellungen drehbar und somit bewegbar, wobei vorzugsweise der Gegenhalter in den Drehstellungen relativ zu dem Basiselement fixierbar oder arretierbar ist, sodass in der jeweiligen Drehstellung um die Drehachse erfolgende Relativbewegungen, das heißt Relativdrehungen zwischen dem Gegenhalter und Basiselement unterbleiben. Um beispielsweise den Siebträger, insbesondere den zweiten Teilbereich, an der ersten Abstützfläche abzustützen, wir beispielsweise der Gegenhalter in dabei erste Drehstellung gebracht, das heißt gedreht. Um beispielsweise den Siebträger, insbesondere den zweiten Teilbereich des Siebträgers, in der zweiten Abstützfläche abzustützen, wird beispielsweise der Gegenhalter in die zweite Drehstellung gebracht, das heißt gedreht. Beispielsweise weist in der ersten Drehstellung die erste Abstützfläche bezogen auf die Gebrauchslage der Kaffeemühle in vertikaler Richtung nach unten. Insbesondere weist beispielsweise in der ersten Drehstellung die erste Abstützfläche zu dem Halter hin. Beispielsweise weist in der zweiten Drehstellung die zweite Abstützfläche bezogen auf die Gebrauchslage der Kaffeemühle in vertikaler Richtung nach unten. Beispielsweise weist in der zweiten Drehstellung die zweite Abstützfläche zu dem Halter hin. Hierdurch kann der Siebträger besonders vorteilhaft und bedarfsgerecht sowie auf besonders einfache Weise relativ zu der Kaffeemühle, insbesondere relativ zu der Führungseinrichtung, positioniert werden, sodass beispielsweise das zumindest nahezu gesamte, aus dem Mahlen resultierende Kaffeepulver in den Siebträger eingeleitet werden kann.

Insbesondere ist es vorgesehen, dass der Gegenhalter eine in um die Drehachse verlaufender Umfangsrichtung des Gegenhalters verlaufende, außenumfangsseitige Mantelfläche aufweist, durch welche die Abstützflächen gebildet sind, insbesondere derart, dass ein erster Teil der Mantelfläche die erste Abstützfläche und ein zweiter Teil der Mantelfläche die zweite Abstützfläche ist. Dabei ist es insbesondere vorgesehen, dass der Gegenhalter, insbesondere die Mantelfläche, insbesondere in einer senkrecht zur Drehachse verlaufenden Ebene betrachtet, unrund ausgebildet ist, wodurch die unterschiedlichen Strecken, mithin die unterschiedlichen Abstände der Abstützflächen von der Drehachse auf einfache Weise darstellbar sind. Da die Abstützflächen um die unterschiedlichen Strecken und somit unterschiedlich weit von der Drehachse beabstandet sind, ist der Gegenhalter ein Exzenter oder der Gegenhalter wird auch als Exzenter bezeichnet, mittels welchem der Siebträger einfach und bedarfsgerecht relativ zu der Kaffeemühle, insbesondere relativ zu der Führungseinrichtung, positioniert werden kann.

Wieder anders ausgedrückt weist der Siebträger dann, wenn er an dem Halter und, insbesondere gleichzeitig, an der ersten Abstützfläche abgestützt ist, eine erste Neigung insbesondere relativ zu der Kaffeemühle auf, sodass der Siebträger beispielsweise die erste Neigung in der ersten Stellung aufweist oder einnimmt. Ist der Siebträger, insbesondere gleichzeitig, an dem Halter und der zweiten Abstützfläche abgestützt, so weist beispielsweise der Halter eine von der ersten Neigung unterschiedliche, zweite Neigung insbesondere relativ zu der Kaffeemühle auf, sodass beispielsweise der Siebträger die zweite Neigung in der zweiten Stellung aufweist oder einnimmt. Dies bedeutet, dass mittels des als Verstellelement ausgebildeten oder als Verstellelement fungierenden Gegenhalters die unterschiedlichen Neigungen des Siebträgers einfach und bedarfsgerecht eingestellt werden können, sodass das Kaffeepulver dem Siebträger vorteilhaft zugeführt werden kann.

Um die unterschiedlichen Stellung und somit insbesondere die unterschiedlichen Neigungen des Siebträgers besonders einfach, bedarfsgerecht und komfortabel einstellen zu können, ist es bei einer Ausführungsform der Erfindung vorgesehen, dass der Gegenhalter um die Drehachse relativ zu dem Basiselement und relativ zu dem Halter in wenigstens oder genau zwei Abstützstellungen drehbar und in den Abstützstellungen relativ zu dem Basiselement und relativ zu dem Halter arretierbar, das heißt fixierbar ist, sodass in der jeweiligen Abstützstellung um die Drehachse verlaufende Relativdrehungen zwischen dem einfach auch als Basis bezeichneten Basiselement und dem Gegenhalter vermieden, das heißt unterbunden sind. Dabei ist in einer ersten der Abstützstellungen die erste Abstützfläche dem Halter zugewandt, sodass in der ersten Abstützstellung der Siebträger, insbesondere der zweite Teilbereich, an der ersten Abstützfläche, insbesondere direkt, abstützbar ist. Somit ist beispielsweise die erste Abstützstellung die zuvor genannte, erste Drehstellung. Somit können die vorigen und folgenden Ausführungen zur ersten Drehstellung ohne Weiteres auf die erste Abstützstellung übertragen werden und umgekehrt. Ferner ist es bei dieser Ausführungsform vorzugsweise vorgesehen, dass in einer zweiten der Abstützstellungen die zweite Abstützfläche dem Halter zugewandt ist, sodass in der zweiten Abstützstellung der Siebträger an der zweiten Abstützfläche, insbesondere direkt, abstützbar ist. Somit ist beispielsweise die zweite Abstützstellung die zweite Drehstellung, sodass die vorigen und folgenden Ausführungen zur zweiten Drehstellung ohne Weiteres auf die zweite Abstützstellung übertragen werden können und umgekehrt. Beispielsweise ist es vorgesehen, dass in der ersten Abstützstellung die zweite Abstützfläche dem Halter nicht zugewandt ist, insbesondere von dem Halter weg weist oder an dem Halter vorbeiweist. Ferner ist es vorzugsweise vorgesehen, dass in der zweiten Abstützstellung die erste Abstützfläche nicht dem Halter zugewandt ist, sondern insbesondere von dem Halter weg weist oder an dem Halter vorbeiweist. Dadurch können die Neigungen des Siebträgers vorteilhaft und bedarfsgerecht eingestellt werden.

Eine weitere Ausführungsform zeichnet sich dadurch aus, dass der Gegenhalter eine um eine dritte Strecke, welche sich, insbesondere bezogen auf den vorgenannten Zustand, entlang einer senkrecht zur Drehachse verlaufenden, dritten Geraden erstreckt, von der Drehachse beabstandete, dritte Abstützfläche aufweist, an welcher zum Halten des Siebträgers an dem Halter der Siebträger, insbesondere der zweite Teilbereich, abstützbar, insbesondere direkt abstützbar, ist. Dabei verlaufen die drei Geraden paarweise schräg oder senkrecht zueinander, wobei die dritte Strecke größer als die erste Strecke und kleiner als die zweite Strecke ist. Somit kann der Siebträger insbesondere hinsichtlich seiner Neigung relativ zu der Kaffeemühle, insbesondere relativ zu der Führungseinrichtung, besonders bedarfsgerecht eingestellt werden, sodass das Kaffeepulver dem Siebträger besonders vorteilhaft zugeführt werden kann, ohne dass eine übermäßige Menge des Kaffeepulvers den Siebträger verfehlt.

Dabei hat es sich als besonders vorteilhaft gezeigt, wenn der Gegenhalter um die Drehachse relativ zu dem Basiselement und relativ zu dem Halter in eine auch als dritte Drehstellung bezeichnete, dritte Abstützstellung drehbar ist, wobei der Gegenhalter in der ersten Abstützstellung, der zweiten Abstützstellung, der dritten Abstützstellung relativ zu dem Basiselement und relativ zu dem Halter arretierbar, das heißt fixierbar ist, sodass in der jeweiligen Abstützstellung um die Drehachse erfolgende Relativdrehungen zwischen dem Gegenhalter und dem Basiselement und auch zwischen dem Gegenhalter und dem Halter unterbunden sind. In der dritten Abstützstellung ist die dritte Abstützfläche dem Halter zugewandt. Insbesondere ist es vorgesehen, dass bezogen auf die Gebrauchslage der Kaffeemühle in der dritten Abstützstellung die dritte Abstützfläche in vertikaler Richtung nach unten weist. Somit ist in der dritten Abstützstellung der Siebträger, insbesondere der zweite Teilbereich des Siebträgers, an der dritten Abstützfläche, insbesondere direkt, abstützbar. Beispielsweise ist es vorgesehen, dass in der ersten Abstützstellung die zweite Abstützfläche und die dritte Abstützfläche nicht dem Halter zugewandt sind, sondern von dem Halter wegweisen oder an dem Halter vorbeiweisen. Beispielsweise ist es vorgesehen, dass in der zweiten Abstützstellung die erste Abstützfläche und die dritte Abstützfläche nicht dem Halter zugewandt sind, sondern vom Halter wegweisen oder an dem Halter vorbeiweisen. Insbesondere ist es ferner vorgesehen, dass in der dritten Abstützstellung die erste Abstützfläche und die zweite Abstützfläche nicht dem Halter zugewandt sind, sondern beispielsweise von dem Halter wegweisen oder an dem Halter vorbeiweisen.

Die drei Abstützflächen sind paarweise betrachtet unterschiedlich weit von der Drehachse beabstandet, sodass die Neigung des Siebträgers umfangreich, einfach, komfortabel und bedarfsgerecht variiert werden kann.

Um den Siebträger besonders einfach und somit komfortabel oder bedarfsgerecht relativ zu der Kaffeemühle positionieren zu können, insbesondere hinsichtlich der Neigung des Siebträgers, ist es in weiterer Ausgestaltung der Erfindung vorgesehen, dass der Gegenhalter nur durch um die Drehachse und relativ zu dem Halter und dem Basiselement erfolgendes Drehen des Gegenhalters in die Abstützstellungen drehbar und in der jeweiligen Abstützstellung relativ zu dem Halter und relativ zu dem Basiselement arretierbar ist. Dies bedeutet, dass beispielsweise eine Person den Gegenhalter einfach nur um die Drehachse relativ zu dem Basiselement in die jeweilige Abstützstellung drehen und daraufhin den Gegenhalter loslassen kann, welcher in der jeweiligen Abstützstellung, in die der Gegenhalter gedreht wurde, verbleibt, ohne dass die Person eine weitere Tätigkeit zum Arretieren des Gegenhalters in der jeweiligen Abstützstellung vornehmen muss oder vornimmt.

Um den Siebträger insbesondere hinsichtlich seiner Neigung besonders umfangreich und beispielsweise stufenlos positionieren zu können, ist es in weiterer Ausgestaltung der Erfindung vorgesehen, dass der Gegenhalter entlang seiner um die Drehachse verlaufenden Umfangsrichtung betrachtet und dabei insbesondere in der zuvor genannten Ebene betrachtet außenumfangsseitig als ein Unrund ausgebildet ist. Somit ist insbesondere die zuvor genannte, außenumfangsseitige Mantelfläche des Gegenhalters in Umfangsrichtung des Gegenhalters und insbesondere in der Ebene betrachtet als ein Unrund ausgebildet.

Ein weitere Ausführungsform zeichnet sich dadurch, dass der Gegenhalter einstückig ausgebildet, das heißt aus einem einzigen Stück gebildet ist. Dies bedeutet, dass der Gegenhalter nicht etwa aus mehreren, separat voneinander ausgebildeten und miteinander verbundenen Teilen zusammengesetzt ist, sondern der Gegenhalter ist einstückig, das heißt einteilig ausgebildet, mithin aus einem einzigen Stück gebildet und somit durch einen Monoblock gebildet oder als ein Monoblock ausgebildet. Dadurch kann mittels des Gegenhalters der Siebträger besonders bedarfsgerecht sowie auf einfache und kostengünstige Weise relativ zu der Kaffeemühle positioniert werden.

Um den Siebträger stabil und somit sicher an der Kaffeemühle haltern zu können, sodass der Siebträger besonders vorteilhaft mit dem Kaffeepulver versorgt werden kann, ist es in weiterer Ausgestaltung der Erfindung vorgesehen, dass der Halter wenigstens eine dem Gegenhalter zugewandte Haltefläche aufweist, an welcher der Siebträger in eine senkrecht zur Drehachse verlaufende und von der Drehachse wegweisende Abstützrichtung, insbesondere direkt, abstützbar ist. Insbesondere ist somit der erste Teilbereich des Siebträgers an der Haltefläche, insbesondere direkt, abgestützt. Beispielsweise weist die Haltefläche bezogen auf die Gebrauchslage der Kaffeemühle in vertikaler Richtung nach oben.

Eine weitere Ausführungsform der Erfindung zeichnet sich dadurch aus, dass die Kaffeemühle das zuvor genannte Mahlwerk zum Mahlen der Kaffeebohnen sowie ein auch als Mühlengehäuse bezeichnetes Gegenhalter aufweist, durch welches ein Schacht begrenzt ist. Des Weiteren weist die Kaffeemühle ein in den Schacht mündende Rutsche zum Führen des Kaffeepulvers in den Schacht auf, in welchem der Halter und der Gegenhalter angeordnet sind. Die Rutsche ist beispielsweise die zuvor genannte Führungseinrichtung oder die zuvor genannte Führungseinrichtung umfasst die Rutsche. Somit kann das aus dem Mahlen resultierende Kaffeepulver dem Siebträger besonders vorteilhaft zugeführt werden.

Dabei hat es sich als besonders vorteilhaft gezeigt, wenn der Halter in dem Schacht relativ zu dem Gehäuse, relativ zu dem Gegenhalter, relativ zu der Rutsche und relativ zu dem Mahlwerk entlang einer senkrecht zur Drehachse verlaufenden Bewegungsrichtung translatorisch in wenigstens zwei voneinander unterschiedliche Positionen bewegbar und in den Positionen relativ zu dem Gehäuse, relativ zu dem Gegenhalter, relativ zu der Rutsche und relativ zu dem Mahlwerk arretierbar, das heißt fixierbar ist, sodass in der jeweiligen, auch als Höhenstellung oder Höhenposition bezeichneten Position Relativbewegungen zweite Wert dem Gehäuse und dem Halter unterbleiben. Bezogen auf die Gebrauchslage der Kaffeemühle verläuft die auch als Bewegungsrichtung bezeichnete Bewegungsachse in vertikaler Richtung. Somit kann auch in vertikaler Richtung der Siebträger bedarfsgerecht relativ zu der Kaffeemühle und dabei insbesondere relativ zu der Führungseinrichtung positioniert werden, sodass das Kaffeepulver dem Siebträger besonders vorteilhaft zugeführt werden kann.

Schließlich hat es sich als besonders vorteilhaft gezeigt, wenn an dem Halter ein Anschlagselement um eine zweite Drehachse relativ zu dem Halter drehbar gehalten ist, wobei beispielsweise die zweite Drehachse parallel zur ersten Drehachse verläuft. Dies bedeutet, dass das Anschlagselement relativ zu dem Halter und vorzugsweise auch relativ zu dem Gegenhalter um die zweite Drehachse gedreht werden kann, während Anschlagselement an dem Halter gehalten ist, das heißt mit dem Halter verbunden ist. Dabei weist das Anschlagselement eine Anschlagfläche auf, an welcher der Siebträger in der auch als Einbaulage bezeichneten Gebrauchslage der Kaffeemühle in horizontaler Richtung, insbesondere direkt, abstützbar ist. Somit weist beispielsweise der Siebträger einen dritten Teilbereich auf, welcher bezogen auf die Gebrauchslage der Kaffeemühle in horizontaler Richtung, insbesondere direkt, an dem Anschlagselement abstützbar ist. Das Anschlagselement ist durch um die zweite Drehachse und relativ zu dem Halter erfolgendes Drehen des Anschlagselements bezogen auf die Gebrauchslage der Kaffeemühle in horizontaler Richtung relativ zu dem Halter in wenigstens zwei voneinander unterschiedliche Anschlagstellungen translatorisch bewegbar. Somit kann durch Bewegen des Anschlagselements in die jeweilige Anschlagstellung eine Position des Siebträgers relativ zu dem Halter in horizontaler Richtung eingestellt, das heißt variiert werden, sodass der Siebträger bezogen auf die Gebrauchslage auch horizontal, das heißt in horizontaler Richtung bedarfsgerecht und vorteilhaft relativ zu der Führungseinrichtung positioniert werden kann. Dadurch kann dem Siebträger das Kaffeepulver besonders vorteilhaft zugeführt werden.

Ein zweiter Aspekt der Erfindung betrifft eine Kaffeemühle zum Mahlen von Kaffeebohnen mit einem Halter, an welchem ein Siebträger zum Auffangen eines aus dem Mahlen resultierenden Kaffeepulvers abstützbar ist.

Um das aus dem Mahlen der Kaffeebohnen resultierende Kaffeepulver dem Siebträger besonders vorteilhaft zuführen zu können, insbesondere derart, dass zumindest nahezu das gesamte Kaffeepulver in den Siebträger eingeleitet werden kann, ist es bei dem zweiten Aspekt der Erfindung vorgesehen, dass an dem Halter ein Anschlagselement um eine Drehachse relativ zu dem Halter drehbar gehalten ist, wobei das Anschlagselement eine Anschlagfläche aufweist, an welcher der Siebträger in Einbaulage der Kaffeemühle, das heißt bezogen auf die zuvor genannte Gebrauchslage der Kaffeemühle in horizontaler Richtung, insbesondere direkt, abstützbar ist. Somit nimmt die Kaffeemühle ihre Einbaulage in vollständig hergestelltem Zustand der Kaffeemühle und insbesondere dann ein, wenn sich die Kaffeemühle in ihrer für ihren bestimmungsgemäßen Gebrauch vorgesehenen Lage oder Ausrichtung befindet. Außerdem ist es bei dem zweiten Aspekt der Erfindung vorgesehen, dass das Anschlagselement durch um die Drehachse und relativ zu dem Halter erfolgendes Drehen des Anschlagselements in Einbaulage der Kaffeemühle in horizontaler Richtung relativ zu dem Halter in wenigstens zwei voneinander unterschiedliche Stellungen translatorisch bewegbar ist. Durch Bewegen des Anschlagselements in die jeweilige Anschlagstellung kann bezogen auf die Einbaulage beziehungsweise auf die Gebrauchslage der Kaffeemühle der Siebträger hinsichtlich seiner horizontalen Position oder Ausrichtung relativ zu der Kaffeemühle bedarfsgerecht eingestellt werden, sodass das Kaffeepulver besonders vorteilhaft in den Siebträger hineinrutschen oder hineinrieseln kann, ohne dass eine übermäßige Menge des Kaffeepulvers den Siebträger verfehlt und ungenutzt bleibt. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Das Anschlagselement ist beispielsweise derart durch um die Drehachse und relativ zu dem Halter erfolgendes Drehen des Anschlagselements relativ zu dem Halter translatorisch bewegbar, das heißt verschiebbar, dass beispielsweise ein mit dem Anschlagselement mitdrehbares, also drehfest verbundenes, erstes Gewinde vorgesehen ist, wobei beispielsweise der Halter ein mit dem ersten Gewinde korrespondierendes, zweites Gewinde aufweist, und wobei beispielsweise das Anschlagselement und das erste Gewinde um die Drehachse relativ zu dem zweiten Gewinde drehbar sind. Eines der Gewinde, insbesondere das erste Gewinde, ist beispielsweise ein Außengewinde, wobei das andere Gewinde, insbesondere das zweite Gewinde, ein Innengewinde ist. Insbesondere sind die Gewinde, insbesondere direkt, miteinander verschraubt, das heißt, dass die Gewinde, insbesondere direkt, ineinander geschraubt sind. Werden nun das Anschlagselement und somit das erste Gewinde um die Drehachse relativ zu dem zweiten Gewinde gedreht, sodass das Anschlagselement und das erste Gewinde um die Drehachse eine auch als Drehung bezeichnete, translatorische Bewertung relativ zu dem zweiten Gewinde ausführen, so wird diese Drehung des Anschlagselements und des ersten Gewindes mittels der Gewinde in eine entlang der Drehachse des Anschlagselements verlaufende, translatorische Relativbewegung zwischen den Gewinden und somit zwischen dem Anschlagselement und dem Halter umgewandelt. Hierdurch kann bezogen auf die Gebrauchslage (Einbaulage) der Kaffeemühle das Anschlagselement und dabei insbesondere dessen Anschlagfläche in horizontaler Richtung bedarfsgerecht positioniert werden. Mit anderen Worten können hierdurch eine Lage, Stellung oder Positionierung der Anschlagfläche bezogen auf die Gebrauchslage der Kaffeemühle in horizontaler Richtung eingestellt, das heißt variiert werden, wodurch der Siebträger hinsichtlich seiner horizontalen Ausrichtung und relativ zu der Kaffeemühle eingestellt, das heißt variiert werden kann. Dadurch kann dem Siebträger das Kaffeepulver besonders vorteilhaft zugeführt werden.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung vorwendbar, ohne den Rahmen der Erfindung zu verlassen.

Die Zeichnung zeigt in:
- Fig. 1: eine schematische Perspektivansicht einer Kaffeemühle zum Mahlen von Kaffeebohnen;
- Fig. 2: ausschnittsweise eine schematische Perspektivansicht der Kaffeemühle;
- Fig. 3: ausschnittsweise eine weitere schematische Perspektivansicht der Kaffeemühle;
- Fig. 4: ausschnittsweise eine schematische Schnittansicht der Kaffeemühle;
- Fig. 5: ausschnittsweise eine schematische Seitenansicht einer Halteanordnung eines Siebträgers an der Kaffeemühle, wobei der Siebträger eine erste Neigung relativ zu der Kaffeemühle aufweist;
- Fig. 6: ausschnittsweise eine weitere schematische Seitenansicht der Halteanordnung, wobei der Siebträger eine von der ersten Neigung unterschiedliche, zweite Neigung relativ zu der Kaffeemühle aufweist; und
- Fig. 7: ausschnittsweise eine schematische Perspektivansicht der Halteanordnung.

In den Figuren sind gleiche oder funktionsgleiche Elemente mit gleichen Bezugszeichen versehen.

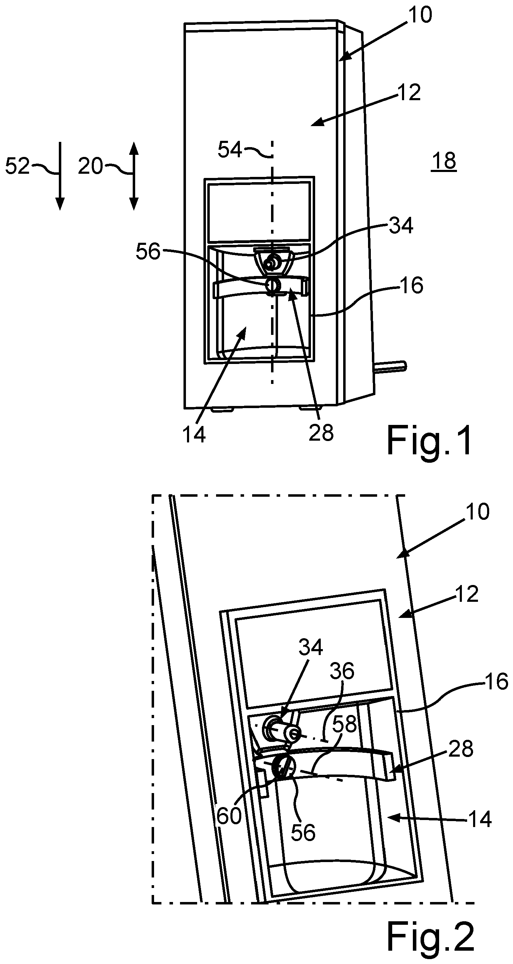

Fig. 1 zeigt in einer schematischen Perspektivansicht eine einfach auch als Mühle bezeichnete Kaffeemühle 10 zum Mahlen von Kaffeebohnen, um hierdurch aus den Kaffeebohnen ein auch als Kaffeepulver bezeichnetes Pulver zu erzeugen, das heißt herzustellen. Besonders gut aus einer Zusammenschau von Fig. 1 bis 4 ist erkennbar, dass die Kaffeemühle 10 ein Gehäuse 12 aufweist, durch welches eine auch als Schacht 14 bezeichnete Aufnahme, insbesondere direkt, begrenzt wird. Der Schacht 14 an sich, das heißt für sich alleine betrachtet, weist eine Öffnung 16 auf, über die der Schacht 14 zu einer Umgebung 18 der Kaffeemühle 10 hin offen ist. Dies bedeutet, dass der Schacht 14 über die Öffnung 16 von der Umgebung 18 aus zugänglich ist, sodass beispielsweise eine sich in der Umgebung 18 aufhaltende Person über die Öffnung 16, welche eine Durchgangsöffnung ist, in den Schacht 14 hineingreifen kann. Fig. 1 zeigt die Kaffeemühle 10 in deren auch als Einbaulage bezeichneten Gebrauchslage. Die Kaffeemühle 10 befindet sich in ihrer für ihren bestimmungsgemäßen Gebrauch vorgesehenen Lage oder Ausrichtung in der Gebrauchslage, wobei die Kaffeemühle 10 in der Gebrauchslage in vertikaler Richtung nach unten hin an einer zumindest im Wesentlichen horizontalen Fläche abgestützt ist. Die vertikale Richtung ist durch einen Doppelpfeil 20 veranschaulicht. Dabei ist der Schacht 14 über die Öffnung 16 von der Umgebung 18 aus in der Gebrauchslage der Kaffeemühle 10 zugänglich, insbesondere für die zuvor genannte, sich in der Umgebung 18 aufhaltende Person.

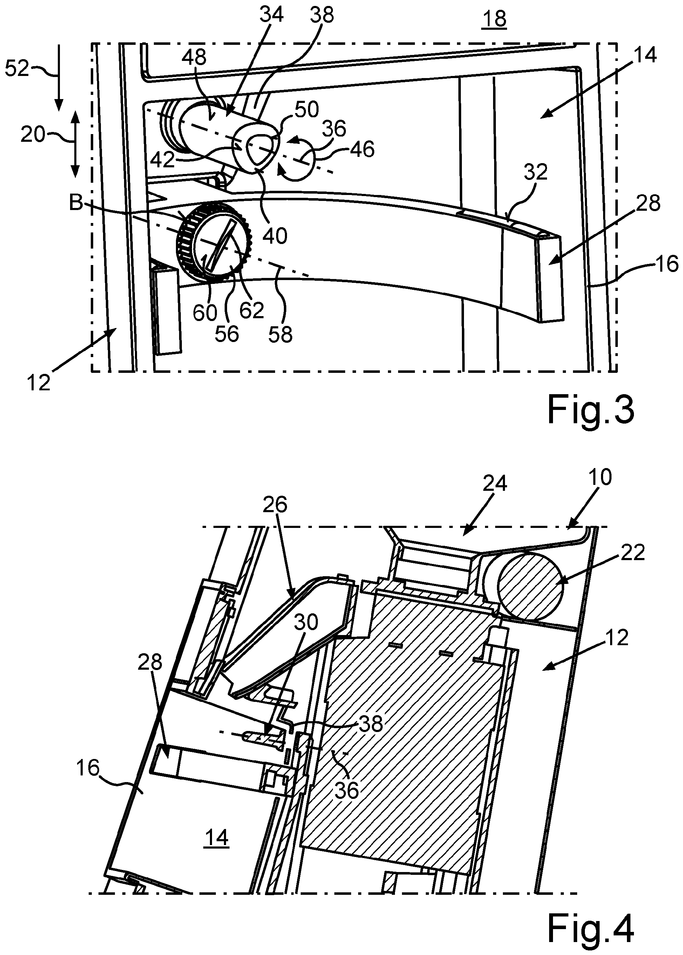

Wie aus Fig. 4 erkennbar ist, weist die Kaffeemühle 10 ein in Fig. 4 besonders schematisch dargestelltes Mahlwerk 22 auf, mittels welchem die Kaffeebohnen gemahlen werden können. Dabei weist die Kaffeemühle 10 einen Aufnahmebereich 24 auf, in welchen die Kaffeebohnen aufnehmbar sind. Beispielsweise ist der Aufnahmebereich 24, insbesondere direkt, durch das Gehäuse 12 begrenzt. Die in den Aufnahmebereich 24 aufnehmbaren oder aufgenommenen Kaffeebohnen können, insbesondere rein, schwerkraftbedingt zu dem und in das Mahlwerk 22 rutschen und somit in dem Mahlwerk 22 und mittels des Mahlwerks 22 gemahlen werden, um dadurch das Kaffeepulver zu erzeugen. Dabei ist das Mahlwerk 22 innerhalb des Gehäuses 12 angeordnet. Die Kaffeemühle 10 weist außerdem eine in den Schacht 14 mündende Rutsche 26 auf, entlang welcher das aus dem Mahlen der Kaffeebohnen resultierende Kaffeepulver, insbesondere rein, schwerkraftbedingt rutschen kann, derart, dass mittels der Rutsche 26 das Kaffeepulver, insbesondere rein, schwerkraftbedingt in den Schacht 14 geführt werden kann. Die Rutsche 26 ist eine Führungseinrichtung oder ist Bestandteil einer Führungseinrichtung, mittels welcher das Kaffeepulver, wenn es nach dem Mahlen, insbesondere rein, schwerkraftbedingt entlang der Führungseinrichtung rutscht, in den Schacht 14 geführt wird oder geführt werden kann.

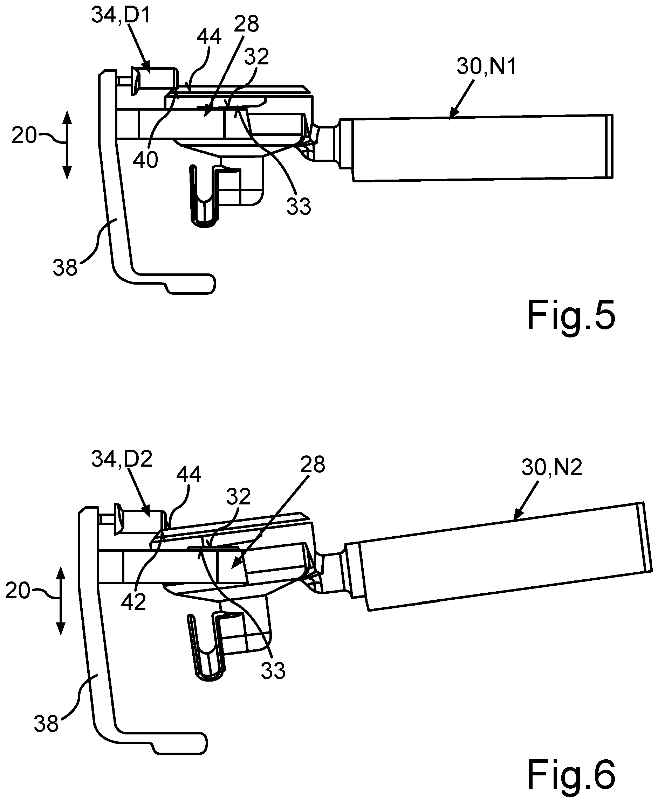

Aus Fig. 1 bis 4 ist außerdem erkennbar, dass die Kaffeemühle 10 einen Halter 28 aufweist, welcher in dem Schacht 14 angeordnet ist. Aus Fig. 5 bis 7 ist erkennbar, dass an dem Halter 28, welcher in dem Schacht 14 angeordnet ist, ein Siebträger 30 zum Auffangen des Kaffeepulvers abstützbar ist, derart, dass bezogen auf die Gebrauchslage der Kaffeemühle 10 der Siebträger 30 in vertikaler Richtung nach unten, insbesondere direkt, an dem Halter 28 abstützbar oder abgestützt ist. Hierfür weist der Halter 28 beispielsweise erste Abstützflächen 32 auf, welche in der Gebrauchslage der Kaffeemühle 10 in vertikaler Richtung nach oben weisen. Ein jeweiliger, erster Teilbereich 33 des Siebträgers 30 ist, insbesondere bezogen auf die Gebrauchslage der Kaffeemühle 10 in vertikaler Richtung nach unten hin, sowie ganz vorzugsweise direkt, an der jeweiligen Abstützfläche 32 abstützbar, wodurch der Siebträger 30, insbesondere bezogen auf die Gebrauchslage der Kaffeemühle 10 in vertikaler Richtung nach unten hin, sowie ganz vorzugsweise direkt, an dem Halter 28 abstützbar ist. Die jeweilige Abstützfläche 32 ist dabei konvex gewölbt und vorliegend beispielsweise kreisförmig oder kreissegmentförmig ausgebildet. Das, insbesondere rein, schwerkraftbedingt entlang der Rutsche 26 rutschende Kaffeepulver kann mittels der Rutsche 26 zu dem und in den Schacht 14 und somit zu dem Siebträger 30 geführt werden, um in der Folge das entlang der Rutsche 26 rutschende Kaffeepulver in den Siebträger 30 einzuleiten und somit einzufüllen.

Um nun hinsichtlich des Einleitens des Kaffeepulvers in den Siebträger 30 eine hohe Treffsicherheit realisieren zu können, sodass kein oder eine möglichst geringe Menge des entlang der Rutsche 26 rutschenden Kaffeepulvers den an dem Halter 28 abgestützten Siebträger 30 verfehlt, weist die Kaffeemühle 10 einen in dem Schacht 14 angeordneten und dem Halter 28, insbesondere bezogen auf die Gebrauchslage der Kaffeemühle 10 in vertikaler Richtung, gegenüberliegenden Gegenhalter 34 auf, welcher um eine erste Drehachse 36 relativ zu dem Halter 28 und relativ zu einem Basiselement 38 der Kaffeemühle 10 drehbar an dem Basiselement 38 gehalten ist. Das Basiselement 38 ist beispielsweise ein Bestandteil des Gehäuses 12, wobei es insbesondere denkbar ist, dass das Basiselement 38 ein Gehäuseteil des Gehäuses 12 ist. Ferner ist es denkbar, dass das Basiselement 38 separat von dem Gehäuse 12 ausgebildet und zumindest mittelbar, insbesondere direkt, mit dem Gehäuse 12 verbunden ist. Beispielsweise kann das Basiselement 38 innerhalb des Gehäuses 12 angeordnet sein. Besonders gut aus Fig. 4 ist erkennbar, dass bei dem in den Figuren gezeigten Ausführungsbeispiel das Basiselement 38 ein Bestandteil, insbesondere Gehäuseteil, des Gehäuses 12 ist.

Der Gegenhalter 34 weist eine erste Abstützfläche 40 auf, welche um eine erste Strecke von der Drehachse 36 beabstandet ist, wobei sich die erste Strecke entlang einer senkrecht zur Drehachse 36 verlaufenden, ersten Geraden erstreckt. Dabei ist der Siebträger 30 insbesondere in einem Zustand, in welchem der Siebträger 30 an dem Halter 28 abgestützt ist, an der ersten Abstützfläche 40, insbesondere direkt, abstützbar, um hierdurch den Siebträger 30 an dem Halter 28 zu halten. Der Gegenhalter 34 weist außerdem eine zweite Abstützfläche 42 auf, welche um eine zweite Strecke von der Drehachse 36 beabstandet ist, wobei sich die zweite Strecke entlang einer senkrecht zur Drehachse 36 und schräg oder senkrecht zur ersten Geraden verlaufenden, zweiten Geraden erstreckt. Dabei ist der Siebträger 30, insbesondere in dem zuvor genannten Zustand, insbesondere direkt, an der zweiten Abstützfläche 42 abstützbar, um hierdurch den Siebträger 30 an dem Halter 28 zu halten. Dabei ist die zweite Strecke größer als die erste Strecke. Dies bedeutet, dass die Abstützflächen 40 und 42, welche in um die Drehachse 36 verlaufender Umfangsrichtung des Gegenhalters 34 voneinander beabstandet sind, unterschiedlich weit von der Drehachse 36 beabstandet sind, wobei der Siebträger 30 in an dem Halter 28 abgestützten Zustand wahlweise an der Abstützfläche 40 oder an der Abstützfläche 42 abstützbar ist. Aus Fig. 5 und 6 ist erkennbar, dass ein von dem jeweiligen Teilbereich 33 wegweisender, zweiter Teilbereich 44 des Siebträgers 30, insbesondere direkt, an der jeweiligen Abstützfläche 40, 42 abstützbar ist. Ferner ist aus Fig. 5 und 6 erkennbar, dass bezogen auf die Gebrauchslage der Kaffeemühle 10 die jeweilige Abstützfläche 32 in vertikaler Richtung nach oben weist. Der Gegenhalter 34 ist um die Drehachse 36 relativ zu dem Basiselement 38 und relativ zu dem Gehäuse 12 und relativ zu dem Halter 28 in wenigstens zwei Abstützstellungen D1 und D2 drehbar und in den Abstützstellungen D1 und D2 relativ zu dem Basiselement 38, relativ zu dem Gehäuse 12 und relativ zu dem Halter 28 arretierbar. In der ersten Abstützstellung D1 ist die erste Abstützfläche 40 des Gegenhalters 34 dem Halter 28 zugewandt, sodass in der ersten Abstützstellung D1 der Siebträger 30, insbesondere der Teilbereich 44, insbesondere direkt, an der ersten Abstützfläche 40 abstützbar ist. Bezogen auf die Gebrauchslage der Kaffeemühle 10 weist in der ersten Abstützstellung D1 die erste Abstützfläche 40 in vertikaler Richtung nach unten. In der zweiten Abstützstellung D2 ist die zweite Abstützfläche 42 des Gegenhalters 34 dem Halter 28 zugewandt, sodass in der zweiten Abstützstellung D2 der Siebträger 30, insbesondere der Teilbereich 44, insbesondere direkt, an der zweiten Abstützfläche 42 abstützbar ist. Bezogen auf die Gebrauchslage der Kaffeemühle 10 weist in der zweiten Abstützstellung D2 die zweite Abstützfläche 42 des Gegenhalters 34 in vertikaler Richtung nach unten. Aus Fig. 5 und 6 ist erkennbar, dass durch Abstützen des Siebträgers 30 an dem Halter 28 einerseits und an der Abstützfläche 40 andererseits eine erste Neigung N1 des Siebträgers 30 relativ zur Kaffeemühle 10 einstellbar ist. Mit anderen Worten ist der Siebträger 30 durch Abstützen des Siebträgers 30 an dem Halter 28 einerseits und an der ersten Abstützfläche 40 andererseits der Siebträger 30 in der ersten Neigung N1 des Siebträgers 30 an der Kaffeemühle 10 zu halten oder gehalten. Durch Abstützen des Siebträgers 30 an dem Halter 28 einerseits und an der zweiten Abstützfläche 42 andererseits ist eine gegenüber der ersten Neigung N1 stärkere, zweite Neigung N2 des Siebträgers 30 relativ zur Kaffeemühle 10 einstellbar. Mit anderen Worten ist durch Abstützen des Siebträgers 30 an dem Halter 28 einerseits und an der Abstützfläche 42 andererseits der Siebträger 30 in der zweiten Neigung N2 des Siebträgers 30 an der Kaffeemühle 10 zu halten oder gehalten. Dies bedeutet, dass durch Drehen des Gegenhalters 34 in die Abstützstellungen D1 und D2 die Neigung N1 und N2 des Siebträgers 30 relativ zu der Kaffeemühle 10 eingestellt werden können, um hierdurch den Siebträger 30 bedarfsgerecht relativ zu der Rutsche 26 positionieren zu können. Somit kann wahlweise die erste Neigung N1 und die zweite Neigung N2 des Siebträgers 30 relativ zur Kaffeemühle 10 und insbesondere relativ zur Rutsche 26 eingestellt werden, um den Siebträger 30 wahlweise derart relativ zur Rutsche 26 positionieren zu können, dass keine oder nur eine möglichst geringe Menge des Kaffeepulvers den Siebträger 30 verfehlt.

Die zuvor genannte, um die Drehachse 36 verlaufende Umfangsrichtung des Halters 28 ist in Fig. 3 durch einen Doppelpfeil 46 veranschaulicht. Die Abstützflächen 40 und 42 sind in Umfangsrichtung des Halters 28 aufeinanderfolgend und voneinander beabstandet angeordnet, wobei die Abstützflächen 40 und 42 durch eine außenumfangsseitige Mantelfläche 48 des Gegenhalters 34 gebildet sind. Die außenumfangsseitige Mantelfläche 48 ist eine Außenhaut des Gegenhalters 34, dessen Außenhaut von der sich in der Umgebung 18 aufhaltenden Person optisch und haptisch wahrgenommen, das heißt erblickt und berührt werden kann. Die zuvor genannten Geraden und die Umfangsrichtung verlaufen in einer Ebene, welche senkrecht zur Drehachse 36 verläuft, wobei die Abstützflächen 40 und 42 in der genannten Ebene betrachtet unterschiedlich weit von der Drehachse 36 beabstandet sind. Beispielsweise ist die außenumfangsseitige Mantelfläche 48 in der Ebene betrachtet als ein Unrund ausgebildet, sodass beispielsweise der Gegenhalter 34, insbesondere die außenumfangsseitige Mantelfläche 48, zumindest in der Ebene betrachtet als ein Exzenter ausgebildet, mithin exzentrisch ausgebildet ist.

Bei dem in den Figuren gezeigten Ausführungsbeispiel weist der Gegenhalter 34 eine um eine dritte Strecke, welche sich entlang einer senkrecht zur Drehachse 36 und in der genannten Ebene verlaufenden dritten Geraden erstreckt, von der Drehachse 36 beabstandete, dritte Abstützfläche 50 auf, an welcher zum Halten des Siebträgers 30 an dem Halter 28 der Siebträger 30, insbesondere der Teilbereich 44, insbesondere direkt, abstützbar ist, wobei die genannten Geraden in der Ebene verlaufen und paarweise schräg oder senkrecht zueinander verlaufen, und wobei die dritte Strecke größer als die erste Strecke und kleiner als die zweite Strecke ist. Somit kann beispielsweise der Gegenhalter 34 um die Drehachse 36 relativ zu dem Basiselement 38 und somit relativ zu dem Gehäuse 12 und relativ zu dem Halter 28 in eine dritte Abstützstellung gedreht werden, wobei der Gegenhalter 34 in der dritten Abstützstellung relativ zu dem Halter 28, relativ zu dem Gehäuse 12 und relativ zu dem Basiselement 38 arretierbar, das heißt fixierbar ist. Bezogen auf die Gebrauchslage der Kaffeemühle 10 weist in der dritten Abstützstellung die dritte Abstützfläche 50 in vertikaler Richtung nach unten. Dies bedeutet, dass in der dritten Abstützstellung die dritte Abstützfläche 50 dem Halter 28 zugewandt ist. Durch Abstützen des Siebträgers 30 an dem Halter 28 einerseits und an der dritten Abstützfläche 50 andererseits kann eine von der ersten Neigung N1 und von der zweiten Neigung N2 unterschiedliche und beispielsweise gegenüber der Neigung N2 schwächere und gegenüber der Neigung N1 stärkere Neigung des Siebträgers 30 relativ zu der Kaffeemühle 10 eingestellt werden, sodass der Siebträger 30 besonders bedarfsgerecht relativ zur Kaffeemühle 10, insbesondere relativ zur Rutsche 26, ausgerichtet, das heißt positioniert werden kann. Insbesondere bezieht sich die jeweilige Neigung N1, N2 und die dritte Neigung auf die Horizontale und die Gebrauchslage der Kaffeemühle 10.

Der Gegenhalter 34 kann nur durch um die Drehachse 36 und relativ zu dem Halter 28, dem Basiselement 38 und dem Gehäuse 12 erfolgendes Drehen des Gegenhalters 34 in die Abstützstellungen D1, D2 und die dritte Abstützstellung gedreht und in der jeweiligen Abstützstellung D1, D2 und der dritten Abstützstellung relativ zu dem Halter 28, dem Gehäuse 12 und dem Basiselement 38 arretiert werden. Dies bedeutet, dass die sich in der Umgebung 18 aufhaltende Person beispielsweise mit ihrer Hand den Gegenhalter 34 ergreifen und in der Folge manuell um die Drehachse 36 in die jeweilige Abstützstellung drehen kann, woraufhin der Gegenhalter 34 ohne Weiteres Zutun der Person in der jeweiligen Abstützstellung verbleibt, mithin in der jeweiligen Abstützstellung relativ zu dem Basiselement 38, dem Halter 28 und dem Gehäuse 12 arretiert oder fixiert ist. Dies bedeutet, dass die Person, nachdem sie den Gegenhalter 34 in die jeweilige Abstützstellung gedreht hat, den Gegenhalter 34 einfach loslassen kann, und der Gegenhalter 34 verbleibt in der jeweiligen Abstützstellung. Hierdurch kann die jeweilige Abstützstellung einfach und komfortabel eingestellt werden. Bei dem in den Figuren gezeigten Ausführungsbeispiel ist der Gegenhalter 34 entlang seiner um die Drehachse 36 verlaufenden und durch den Doppelpfeil 46 veranschaulichten Umfangsrichtung betrachtet und in der genannten Ebene betrachtet außenumfangsseitig als ein Unrund ausgebildet. Außerdem ist der Gegenhalter 34 einstückig, das heißt einteilig ausgebildet. Dies bedeutet, dass der Gegenhalter 34 bei dem in den Figuren gezeigten Ausführungsbeispiel aus einem einzigen Stück gebildet ist.

Die jeweilige Abstützfläche 32 des Halters 28 ist eine jeweilige, dem Gegenhalter 34 zugewandte Haltefläche, an welcher der Siebträger 30, insbesondere der jeweilige Teilbereich 44 des Siebträgers 30, insbesondere direkt, abstützbar ist, und zwar in eine senkrecht zur Drehachse 36 verlaufende und von der Drehachse 36 wegweisende Abstützrichtung, welche bezogen auf die Gebrauchslage der Kaffeemühle 10 in vertikaler Richtung nach unten verläuft und durch einen Pfeil 52 veranschaulicht ist.

Um den Halter 28 und somit den Siebträger 30 besonders bedarfsgerecht relativ zu der Rutsche 26 positionieren zu können, ist es vorzugsweise vorgesehen, dass der Halter 28 in dem Schacht 14 relativ zu dem Gehäuse 12, relativ zu dem Gegenhalter 34, relativ zu der Rutsche 26 und relativ zu dem Halter 28 und auch relativ zu dem Basiselement 38 entlang einer senkrecht zur Drehachse 36 verlaufenden Bewegungsachse 54 translatorisch in wenigstens zwei voneinander unterschiedliche, auch als Höhenpositionen bezeichneten Positionen bewegbar und in den Höhenpositionen relativ zu dem Gehäuse 12, dem Gegenhalter 34, der Rutsche 26, dem Mahlwerk 22 und dem Basiselement 38 arretierbar ist. Bezogen auf die Gebrauchslage verläuft die Bewegungsachse 54 in vertikaler Richtung.

Besonders gut aus Fig. 1 bis 3 ist erkennbar, dass an dem Halter 28 ein Anschlagselement 56 um eine zweite Drehachse 58 relativ zu dem Halter 28 drehbar gehalten ist. Aus Fig. 2 ist erkennbar, dass die Drehachsen 36 und 58 parallel zueinander verlaufen. Das Anschlagselement 56 weist eine Anschlagfläche 60 auf, an welcher der Siebträger 30, insbesondere ein dritter Teilbereich des Siebträgers 30, bezogen auf die Gebrauchslage der Kaffeemühle 10 in horizontaler Richtung und somit insbesondere entlang der zweiten Drehachse, insbesondere direkt, abstützbar ist. Das Anschlagselement 56 ist dabei um die zweite Drehachse 58 und relativ zu dem Halter 28 erfolgendes Drehen des Anschlagselements 56 bezogen auf die Gebrauchslage der Kaffeemühle 10 in horizontaler Richtung, mithin entlang der Drehachse 58 relativ zu dem Halter 28 in wenigstens zwei voneinander unterschiedliche Anschlagstellungen translatorisch bewegbar. Beispielsweise kann die sich in der Umgebung 18 aufhaltende Person mit ihrer Hand das Anschlagselements 56 ergreifen, insbesondere umgreifen, und in der Folge manuell um die Drehachse 58 relativ zu dem Halter 28 drehen, wodurch die Person das Anschlagselement 56 manuell in die jeweilige Anschlagstellung drehen kann. Es ist erkennbar, dass in der jeweiligen Anschlagstellung die Anschlagfläche 60 entlang der Drehachse 58 betrachtet von dem Halter 28, das heißt von einem sich insbesondere direkt an das Anschlagselement 56 anschließenden Oberflächenbereich B des Halters 28 absteht, derart, dass die Anschlagfläche 60 entlang der Drehachse 58 den Oberflächenbereich B überragt. Dabei steht die Anschlagfläche 60 in einer ersten der Anschlagstellungen um eine erste Anschlagstrecke entlang der Drehachse 58 von dem Oberflächenbereich B ab, und in einer zweiten der Anschlagstellung steht die Anschlagfläche 60 um eine zweite Anschlagstrecke entlang der Drehachse 58 von dem Oberflächenbereich B ab, wobei die zweite Anschlagstrecke größer als die erste Anschlagstrecke ist. Dadurch ist dann, wenn der Siebträger 30, insbesondere der dritte Teilbereich des Siebträgers 30, an der Anschlagfläche 60 abgestützt wird, wenn sich das Anschlagselement 56 in der zweiten Anschlagstellung befindet, entlang der Drehachse 58 weiter von dem Oberflächenbereich B beabstandet als wenn sich das Anschlagselement 56 in der ersten Anschlagstellung befindet. Dadurch können auch unterschiedliche Positionen des Siebträgers 30 in horizontaler Richtung, mithin entlang der Drehachse 58 relativ zu dem Halter 28 und somit relativ zur Rutsche 26 eingestellt werden, sodass im Hinblick auf das Einleiten des Kaffeepulvers in den Siebträger 30 eine besonders hohe Treffgenauigkeit erzielt werden kann.

Bei dem in den Figuren gezeigten Ausführungsbeispiel weist das Anschlagselement 56 einen vorliegend als Schlitz ausgebildeten Werkzeugangriff 62 auf, mittels welchem ein beispielsweise als Schlitzschraubendreher ausgebildetes Werkzeug drehmomentübertragend, insbesondere drehfest, mit dem Anschlagselement 56 gekoppelt werden kann, um mittels des Werkzeugs das Anschlagselement 56 um die Drehachse 58 relativ zu dem Halter 28 drehen und dabei insbesondere in die jeweilige Anschlagstellung drehen zu können.

Selbstverständlich ist es möglich, dass die sich in der Umgebung 18 der Kaffeemühle 10 aufhaltende Person mit ihrer Hand das Anschlagselement 56, insbesondere eine außenumfangsseitige Mantelfläche des Anschlagselements 56, ergreift und/oder umgreift und das Anschlagselement 56, insbesondere ein, manuell um Die Drehachse 58 relativ zu dem Halter 28 dreht, wodurch die Person das Anschlagselement 56, insbesondere rein, manuell in die jeweilige Anschlagstellung drehen kann. Um eine vorteilhafte Handhabbarkeit des Anschlagselements 56 zu realisieren, ist es möglich, dass die außenumfangsseitige Mantelfläche des Anschlagselements 56 mit einer gezielt hergestellten Strukturierung wie beispielsweise, insbesondere parallel zur Drehachse 58 verlaufenden, Rippen und/oder einer Rändelung versehen ist.

Vorzugsweise ist es vorgesehen, dass das Anschlagselement 56 nur durch um die Drehachse 58 und relativ zu dem Halter 28 erfolgendes Drehen des Anschlagselements 56 in die Anschlagstellungen drehbar und in der jeweiligen Anschlagstellung relativ zu dem Halter 28 arretierbar ist, sodass, nachdem das Anschlagselement 56 in die jeweilige Anschlagstellung gedreht wurde, keine weiteren Tätigkeiten erforderlich sind, um das Anschlagselement 56 in der jeweiligen Anschlagstellung relativ zu dem Halter 28 zu arretieren, sondern das Anschlagselement 56 bleibt, nachdem es in die jeweilige Anschlagstellung gedreht wurde, selbständig in der jeweiligen Anschlagstellung. Hierdurch kann der Siebträger 30 besonders einfach und komfortabel sowie bedarfsgerecht relativ zur Rutsche 26 positioniert werden.

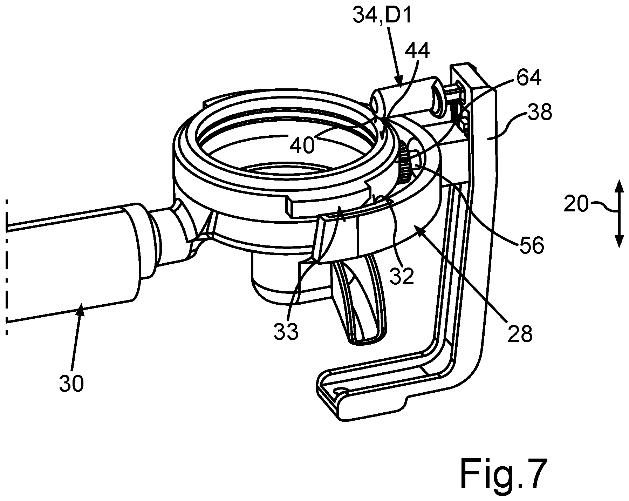

Fig. 7 zeigt einen Abstützzustand des Siebträgers 30. In dem Abstützzustand ist der Siebträger 30, insbesondere der jeweilige, erste Teilbereich 33, bezogen auf die Gebrauchslage der Kaffeemühle 10 in vertikaler Richtung nach unten hin, insbesondere direkt, an der jeweiligen Abstützfläche 32 und somit an dem Halter 28 abgestützt. In vertikaler Richtung nach oben ist der Siebträger 30, insbesondere der Teilbereich 44, insbesondere direkt, an dem Gegenhalter 34 und dabei beispielsweise an der ersten Abstützfläche 40 abgestützt. Außerdem ist der Siebträger 30, insbesondere der in Fig. 7 mit 64 bezeichnete, dritte Teilbereich des Siebträgers 30, entlang der Drehachse 58, insbesondere direkt, an der Anschlagfläche 60 des Anschlagselements 56, abgestützt, wodurch der Siebträger 30 besonders vorteilhaft relativ zu dem Gehäuse 12 und relativ zur Rutsche 26 positioniert ist. Besonders gut aus Fig. 7 erkennbar ist das Basiselement 38. Beispielsweise ist der Halter 28 an dem Basiselement 38 relativ zu dem Gehäuse 12, dem Gegenhalter 34, der Rutsche 26, dem Mahlwerk 22 und dem Basiselement 38 entlang der Bewegungsachse 54 translatorisch bewegbar, das heißt verschiebbar gehalten, sodass der Halter 28 entlang des Basiselements 38 in die unterschiedlichen Höhenpositionen verschoben werden kann.

## Patentansprüche

1. Kaffeemühle (10) zum Mahlen von Kaffeebohnen, mit einem Halter (28), an welchem ein Siebträger (30) zum Auffangen eines aus dem Mahlen resultierenden Kaffeepulvers abstützbar ist,
**gekennzeichnet durch**
einen dem Halter (28) gegenüberliegenden Gegenhalter (34), welcher um eine Drehachse (36) relativ zu dem Halter (28) und relativ zu einem Basiselement (38) der Kaffeemühle (10) drehbar an dem Basiselement (38) gehalten ist und aufweist:
- eine um eine erste Strecke, welche sich entlang einer senkrecht zur Drehachse (36) verlaufenden, ersten Geraden erstreckt, von der Drehachse (36) beabstandete, erste Abstützfläche (40), an welcher zum Halten des Siebträgers (30) an dem Halter (28) der Siebträger (30) abstützbar ist; und
- eine um eine zweite Strecke, welche sich entlang einer senkrecht zur Drehachse (36) verlaufenden, zweiten Geraden erstreckt, von der Drehachse (36) beabstandete, zweite Abstützfläche (42), an welcher zum Halten des Siebträgers (30) an dem Halter (28) der Siebträger (30) abstützbar ist, wobei die zweite Gerade schräg oder senkrecht zur ersten Geraden verläuft und wobei die zweite Strecke größer als die erste Strecke ist.

2. Kaffeemühle (10) nach Anspruch 1,
**dadurch gekennzeichnet, dass**
der Gegenhalter (34) um die Drehachse (36) relativ zu dem Basiselement (38) und relativ zu dem Halter (28) in wenigstens zwei Abstützstellungen (D1, D2) drehbar und in den Abstützstellungen (D1, D2) relativ zu dem Basiselement (38) und relativ zu dem Halter (28) arretierbar ist, wobei:
- in einer ersten der Abstützstellungen (D1, D2) die erste Abstützfläche (40) dem Halter (28) zugewandt ist, sodass in der ersten Abstützstellung (D1) der Siebträger (30) an der ersten Abstützfläche (40) abstützbar ist; und
- in einer zweiten der Abstützstellungen (D1, D2) die zweite Abstützfläche (42) dem Halter (28) zugewandt ist, sodass in der zweiten Abstützstellung (D2) der Siebträger (30) an der zweiten Abstützfläche (42) abstützbar ist.

3. Kaffeemühle (10) nach Anspruch 1 oder 2,
**dadurch gekennzeichnet, dass**
der Gegenhalter (34) eine um eine dritte Strecke, welche sich entlang einer senkrecht zur Drehachse (36) verlaufenden, dritten Geraden erstreckt, von der Drehachse (36) beabstandete, dritte Abstützfläche (50) aufweist, an welcher zum Halten des Siebträgers (30) an dem Halter (28) der Siebträger (30) abstützbar ist, wobei die Geraden paarweise schräg oder senkrecht zueinander verlaufen, und wobei die dritte Strecke größer als die erste Strecke und kleiner als die zweite Strecke ist.

4. Kaffeemühle (10) nach den Ansprüchen 2 und 3,
**dadurch gekennzeichnet, dass**
der Gegenhalter (34) um die Drehachse (36) relativ zu dem Basiselement (38) und relativ zu dem Halter (28) in eine dritte Abstützstellung drehbar und in den drei Abstützstellungen (D1, D2) relativ zu dem Basiselement (38) und relativ zu dem Halter 828) arretierbar ist, wobei in der dritten Abstützstellung die dritte Abstützfläche (50) dem Halter (28) zugewandt ist, sodass in der dritten Abstützstellung der Siebträger (30) an der dritten Abstützfläche (50) abstützbar ist.

5. Kaffeemühle (10) nach Anspruch 2, nach Anspruch 3 in dessen Rückbezug auf Anspruch 2 oder nach Anspruch 4,
**dadurch gekennzeichnet, dass**
der Gegenhalter (34) nur durch um die Drehachse (36) und relativ zu dem Halter (28) und dem Basiselement (38) erfolgendes Drehen des Gegenhalters (34) in die Abstützstellungen (D1, D2) drehbar und in der jeweiligen Abstützstellung (D1, D2) relativ zu dem Halter (28) und relativ zu dem Basiselement (38) arretierbar ist.

6. Kaffeemühle (10) nach einem der vorhergehenden Ansprüche,
**dadurch gekennzeichnet, dass**
der Gegenhalter (34) entlang seiner um die Drehachse (36) verlaufenden Umfangsrichtung (46) betrachtet außenumfangsseitig als ein Unrund ausgebildet ist.

7. Kaffeemühle (10) nach einem der vorhergehenden Ansprüche,
**dadurch gekennzeichnet, dass**
der Gegenhalter (34) einstückig ausgebildet ist.

8. Kaffeemühle (10) nach einem der vorhergehenden Ansprüche,
**dadurch gekennzeichnet, dass**
der Halter (28) wenigstens eine dem Gegenhalter (34) zugewandte Haltefläche (32) aufweist, an welcher der Siebträger (30) in eine senkrecht zur Drehachse (36) verlaufende und von der Drehachse (36) wegweisende Abstützrichtung (52) abstützbar ist.

9. Kaffeemühle (10) nach einem der vorhergehenden Ansprüche,
**dadurch gekennzeichnet, dass**
die Kaffeemühle (10) aufweist:
- ein Mahlwerk (22) zum Mahlen der Kaffeebohnen;
- ein Gehäuse (12), durch welches ein Schacht (14) begrenzt ist; und
- eine in den Schacht (14) mündende Rutsche (26) zum Führen des Kaffeepulvers in den Schacht (14), in welchem der Halter (28) und der Gegenhalter angeordnet (34) sind.

10. Kaffeemühle (10) nach Anspruch 9,
**dadurch gekennzeichnet, dass**
der Halter (28) in dem Schacht (14) relativ zu dem Gehäuse (12), relativ zu dem Gegenhalter (34), relativ zu der Rutsche (26) und relativ zu dem Mahlwerk (22) entlang einer senkrecht zur Drehachse (36) verlaufenden Bewegungsachse (54) translatorisch in wenigstens zwei voneinander unterschiedliche Positionen bewegbar und in den Positionen relativ zu dem Gehäuse (12), relativ zu dem Gegenhalter (34), relativ zu der Rutsche (26) und relativ zu dem Mahlwerk (22) arretierbar ist.

11. Kaffeemühle (10) nach einem der vorhergehenden Ansprüche,
**dadurch gekennzeichnet, dass**
an dem Halter (28) ein Anschlagselement (56) um eine zweite Drehachse (58) relativ zu dem Halter 828) drehbar gehalten ist, wobei:
- das Anschlagselement (56) eine Anschlagfläche (60) aufweist, an welcher der Siebträger (30) in Gebrauchslage der Kaffeemühle (10) in horizontaler Richtung abstützbar ist; und
- das Anschlagselement (56) durch um die zweite Drehachse (58) und relativ zu dem Halter (28) erfolgendes Drehen des Anschlagselements (56) in Gebrauchslage der Kaffeemühle (10) in horizontaler Richtung relativ zu dem Halter (28) in wenigstens zwei voneinander unterschiedliche Anschlagstellungen translatorisch bewegbar ist.

12. Kaffeemühle (10) zum Mahlen von Kaffeebohnen, mit einem Halter (28), an welchem ein Siebträger (30) zum Auffangen eines aus dem Mahlen resultierenden Kaffeepulvers abstützbar ist,
**dadurch gekennzeichnet, dass**
an dem Halter (28) ein Anschlagselement (56) um eine Drehachse (58) relativ zu dem Halter (28) drehbar gehalten ist, wobei:
- das Anschlagselement (56) eine Anschlagfläche (60) aufweist, an welcher der Siebträger (30) in Gebrauchslage der Kaffeemühle (10) in horizontaler Richtung abstützbar ist; und
- das Anschlagselement (56) durch um die Drehachse (58) und relativ zu dem Halter (28) erfolgendes Drehen des Anschlagselements (56) in Gebrauchslage der Kaffeemühle (10) in horizontaler Richtung relativ zu dem Halter (28) in wenigstens zwei voneinander unterschiedliche Stellungen translatorisch bewegbar ist.
